(19) Europäisches Patentamt
European Patent Office
Office européen des brevets

(11) Publication number: 0 209 623
A1

## (12) EUROPEAN PATENT APPLICATION

(21) Application number: 85116173.7

(22) Date of filing: 18.12.85

(51) Int. Cl.⁴: F 16 F 15/04

(30) Priority: 24.07.85 US 758593

(43) Date of publication of application:
28.01.87 Bulletin 87/5

(84) Designated Contracting States:
DE FR GB

(71) Applicant: BARRY WRIGHT CORPORATION
1 Newton Executive Park
Newton Lower Falls Massachusetts 02162(US)

(72) Inventor: Bailey, Donald C.
1026 East San Jose Ave.
Burbank, CA 91501(US)

(72) Inventor: Jensen, William Scott
20714 Kittridge Street
Canoga Park, CA 91306(US)

(74) Representative: Patentanwälte Grünecker, Kinkeldey,
Stockmair & Partner
Maximilianstrasse 58
D-8000 München 22(DE)

(54) Electrically conductive vibration isolator.

(57) An electrically conductive vibration isolator (2) having a dome (4) of dynamically active elastomeric material which is engageable with a dynamic electronic element. The dome is mounted on an electrically conductive base (8) which is engageable with a grounded surface. A flexible electrical conductor (18) is embedded in the elastomeric dome and is electrically connected at one end to the base and to the other end to a grounding contact (12) located at the top of the dome which is engageable with the dynamic element. The vibration isolator conducts electricity to ground from the dynamic element while simultaneously isolating vibration from the element.

FIG. I

EP 0 209 623 A1

# ELECTRICALLY CONDUCTIVE VIBRATION ISOLATOR

## Description

### Field of the Invention

This invention relates to vibration isolators in general and particularly to electrically conductive vibration isolators or vibrators, velocity or accelerators, sensors, which can conduct electricity to ground from a dynamic electrical element while simultaneously isolating vibration from the element.

### Background of the Invention

Dynamic electric equipment such as motors, generators, transformers, and the like, frequently produce unwanted vibration and static electricity while operating. The unwanted vibration is generally isolated by mounting the element on shock absorbers or isolators, which, for the most part, are elastomeric and non-conductive of electricity. While this has proven satisfactory in eliminating one of the problems, the elimination of static electricity has normally been dealt with separately. The conventional means for grounding motors and generators, etc., is to attach a wire, metallic ribbon or other conductive means between the element and ground. The conductor is normally external to and separate from the shock isolator.

When there are a number of dynamic electric elements such as disc drives, stepping motors, and the like, in a frame, grounding each by separate conductive wires creates a number of problems, such as interference with other elements, the taking up of space and the additional steps of soldering or securing the ground wires to each element during manufacturing or assembly.

It is an object of this invention to eliminate the need for separate and external ground wires or conductors for grounding dynamic electrical elements.

It is another object of the invention to combine grounding means with shock isolating means to operate simultaneously.

## Summary of the Invention

The invention is embodied in an electrically conductive vibration isolator comprising a dome of dynamically active elastomeric material which is engageable with a dynamic electronic element such as a disc drive or stepping motor for the purpose of isolating vibrations created by the element. The dome is mounted on an electrically conductive base which is engageable with a grounded surface. A flexible electrical conductor is embedded in the elastomeric dome and is electrically connected at one end to the base and at the other to a grounding contact located at the top of the dome which, in turn, is engageable with the dynamic element which creates the unwanted vibration and static electricity.

The vibration isolator not only isolates vibration from the element but simultaneously conducts to ground the unwanted electricity created by the element.

The flexible conductor may assume a number of configurations. For example, when embedded in the dome it can lie in a plane defined by the center of the dome and the points where the conductor joins with the base and with the grounding contact at the top of the dome. It is thus essentially the cord of a great circle but beneath the surface of the dome. It may also assume a configuration where it is curved relative to said plane thereby being longer, taking a longer path from the grounding contact to the base. This construction permits greater flexibility of the elastomeric dome than the conductor lying in the great circle path.

The grounding contact may be a conductive wafer embedded in the top of the dome with its upper surface exposed for engagement with the dynamic element or may be a removable conductive button received within a conductive ring at the top of the dome which ring is connected to the flexible conductor.

The above and other features of the invention including various novel details of construction and combinations of parts will now be more particularly described with reference to the accompanying drawings and pointed out in the claims. It will be understood that the particular electrically conductive vibration isolator embodying the invention is shown by way of illustration only and not as a limitation of the invention. The principles and features of this invention may be employed in varied and numerous embodiments without departing from the scope of the invention.

Brief Description of the Drawings

Figure 1 is a sectional view of an electrically conductive vibration isolator embodying the present invention and shown in engagement with a dynamic electric element illustrated schematically as a motor.

Figure 2 is a perspective view of a plurality of electrically conductive vibration isolators shown in engagement with the underside a dynamic electric element illustrated schematically as a rectangular block.

Figure 3 is a top plan view of one embodiment of the vibration isolator.

Figure 4 is a sectional view taken on the line IV-IV on Fig. 3.

Figure 5 is a perspective view of the vibration isolator of Fig. 3 with the elastomeric dome removed.

Figure 6 is a top plan view of another embodiment of the vibration isolator.

Figure 7 is a sectional view taken on the line VII-VII on Fig. 6.

Figure 8 is a perspective view of the vibration isolator of Fig. 6 with the elastomeric dome removed.

Figure 9 is top plan view of another embodiment of the invention.

Figure 10 is a sectional view taken on the line X-X of Fig. 9.

Figure 11 is a perspective view of the vibration isolator of Fig. 9 with the elastomeric dome removed.

## Best Mode of Carrying Out the Invention

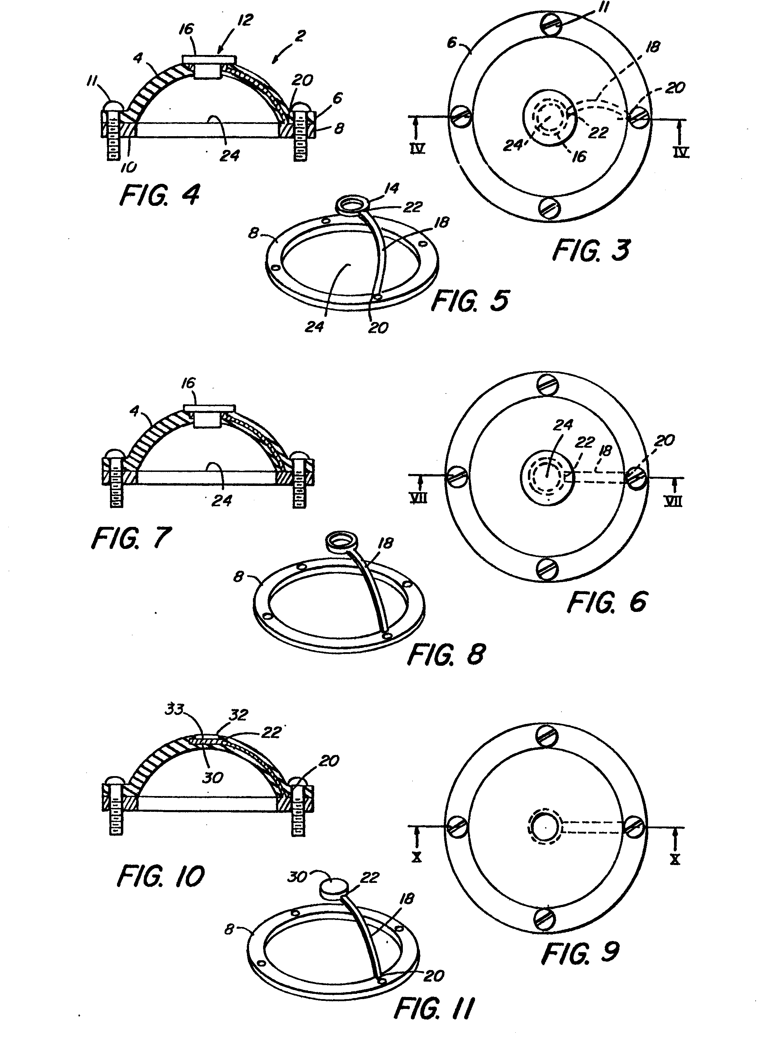

Referring to Figs. 3, 4, and 5, an electrically conductive vibration isolator 2 will be seen comprising a dome 4 made of a dynamically active, resilient elastomeric material such as rubber, butyl, neoprene, or the like. The dome is circular and may be in the form of a hemisphere although it is not necessarily restricted to this configuration. The base of the dome includes a circular flange 6 which fits on the top of an electrically conductive ring or base 8 of of copper or other electrically conductive material. The bottom 10 of base 8 is engageable with a grounded surface (not shown). The dome 4 is shown secured to the base 8 by screws 11. Any other convenient securing means such as riveting, thermal bonding, vulcanized bonding or bonding adhesive may be employed. The base 8 need not necessarily be a ring, or even the same size as the dome 4. It could, for example, be a square or other rectangle, the only requirement being that it be electrically conductive. Preferably it is made of a generally non-extensible material.

A grounding contact, generally indicated 12, is located at the top of the dome and is engageable with any dynamic electric element as will be described in more detail hereinafter. The grounding contact in this embodiment includes a ring 14 of copper or other conductive material into which a conductive button 16, made of carbon or the like, is removably inserted. The ring 14 is spaced vertically from the base ring 8. Joining the ring 14 to the base ring 8 is a flexible electric conductor 18 which may be in the form of a ribbon or wire of conductive material such as copper. It may also be a conductive elastomeric strip.

As seen in Figure 3, the conductor 18 is joined to the base ring 8 at a point designated 20 and to the ring 14 at a point designated 22. As seen in Fig. 3, the conductor is curvilinear relative to a plane defined by the points 20, 22, and 24 which is the center of the base of the dome 4.

Referring next to Fig. 6, the flexible conductor 18 will be seen lying in the plane defined by the points 20, 22, and the center 24 of the base of the dome. In effect, the conductor of the Fig. 6 embodiment lies essentially in an arc of a great circle passing through the top of the dome 4 but beneath the surface of the dome. When viewed from above, as in Fig. 6, the conductor of this embodiment will be seen to extend radially with respect to the center of the dome as defined by the vertical extension of the center 24 to the top of the dome. In the Fig. 3 embodiment, it will be seen to extend spirally. Consequently, the flexible conductor of the Fig. 3 embodiment is longer than the flexible conductor of the Fig. 6 embodiment.

The Fig. 6 embodiment would be employed in instances where there is only a small amount of vibration to be isolated and the elastomeric dome is only flexed a small amount. However, where there is a greater amount of vibration resulting in greater flexure or compression of the dome due to the weight of the dynamic electric element, the Fig. 3 embodiment would be employed. The greater length of the conductor 18 permits greater deflection of the dome 4 under loading without being impeded by the conductors tensile limit.

As seen in Figs. 4 and 7, the ring 14 and the flexible conductor 18 are embedded in the dome 4 by molding the entire dome over the ring and the conductor with the flange 6 of the dome 4 molded over the upper surface of the base ring 8.

As seen in Figs. 9, 10, and 11, the grounding contact is shown as a wafer or disc 30 secured at 22 to the flexible conductor 18. As seen in Fig. 10, the wafer 30 is embedded in the elastomeric dome 4 with a circular opening 32 formed in the dome to expose the upper surface 33 of the wafer for engagement with the dynamic electric element from which it is desired to isolate vibration and to ground unwanted electricity. The wafer 30 may be attached to the grounding ring 8 by either of the configurations of the flexible conductor 18 shown in Figs. 3 and 6.

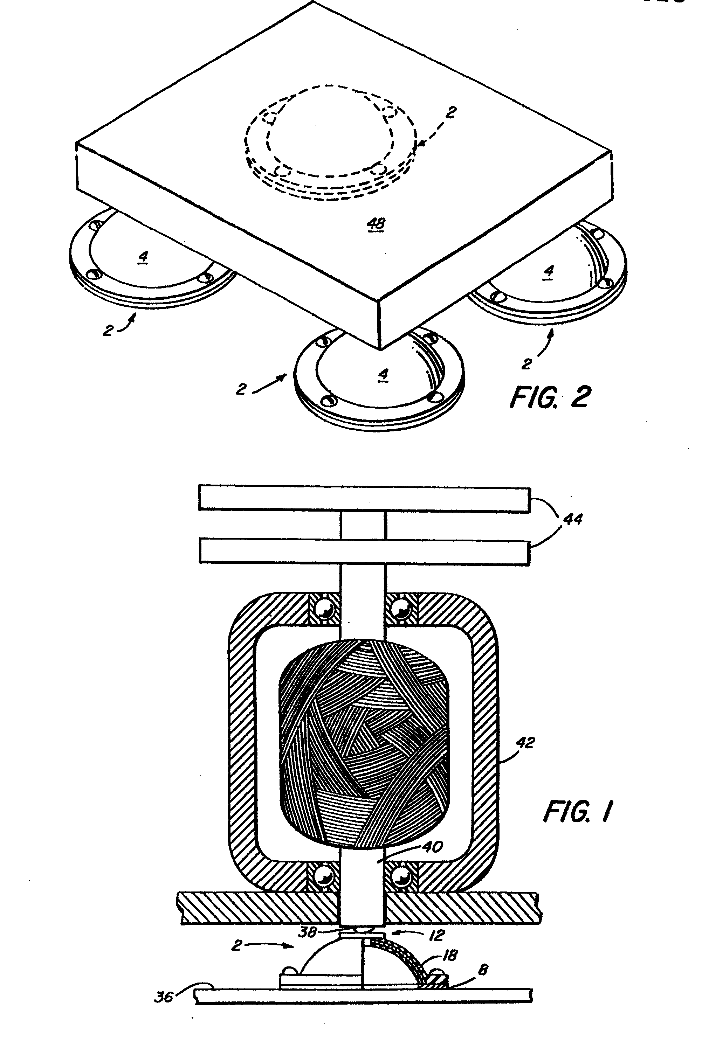

As seen in Fig. 1, a vibration isolator 2 is secured to a grounded surface 36 with the grounding contact 12 in engagement with a contact 38 projecting from the lower end of a rotatable shaft 40 of a motor 42. For illustrative purpose, the motor is shown driving computer disks 44.

In assembly, the elastomeric dome 4 is compressed slightly so that the contact 38 firmly engages the grounding contact 12. As the motor 42 rotates, any unwanted static electricity is conducted to ground through the grounding contact 12, the flexible conductor 18, the ring or base 8, and into the grounded surface 36. Simultaneously, any vibration of the motor 42 is isolated by the elastomeric dome 4 with the flexible conductor 18 flexing with the dome as it is compressed and expanded.

Any wear that takes place in the contact 38 or the grounding contact 12 of the vibration isolator is compensated for by the elastomeric dome moving gradually upward from the position it occupied when it was initially assembled in compressed form.

Fig. 2 illustrates four vibration isolators supporting the corners of a dynamic element 48 which is illustrated merely as a rectangle. As the element 48 vibrates on the four vibration isolators 2, each serves to simultaneously isolate the vibration and conduct unwanted electricity to ground.

## Claims

1. An electrically conductive vibration isolator comprising:

a dome of dynamically active elastomeric material,

an electrically conductive base supporting the elastomeric dome and engageable with a grounded surface,

an electrically conductive grounding contact at the top of the dome engageable with a dynamic electric element,

a flexible electrical conductor embedded in the elastomeric dome and connected to the grounding contact and the base;

whereby the vibration isolator can conduct electricity to ground from the dynamic element while simultaneously isolating vibration from the element.

2. An electrically conductive vibration isolator comprising:

a dome of dynamically active elastomeric material,

a first electrically conductive ring supporting the base of the elastomeric dome and engageable with a grounded surface,

a second electrically conductive ring embedded in the top of the dome,

an electrically conductive contact button removably supported in the second ring and engageable with a dynamic electric element,

a flexible electrical conductor embedded in the elastomeric dome and connected to both rings,

whereby the vibration isolator can conduct electricity to ground from the dynamic element while simultaneously isolating vibration from the element.

3. An electrically conductive vibration isolator comprising:

a dome of dynamically active elastomeric material,

an electrically conductive ring engageable with a grounded surface,

an electrically conductive grounding contact located above the conductive ring and engageable with a dynamic electric element,

a flexible electrical conductor connected to the grounding contact and the conductive ring,

the electrical conductor being embedded in the dome with the grounding contact exposed at the top of the dome and with the base of the dome positioned on the conductive ring,

whereby the vibration isolator can conduct electricity to ground from the dynamic element while simultaneously isolating vibration from the element.

4. An electrically conductive vibration isolator according to Claim 1, wherein the flexible electrical conductor lies in a plane defined by the center of the base of the dome and the points where the flexible electrical conductor joins the electrically conductive base and the grounding contact.

5. An electrically conductive vibration isolator according to Claim 2, wherein the flexible electrical conductor lies in a plane defined by the center of the base of the dome and the points where the flexible electrical conductor joins the first and second conductive rings.

6. An electrically conductive vibration isolator according to Claim 3, wherein the flexible electrical conductor lies in a plane defined by the center of the base of the dome and the points where the flexible electrical conductor joins the conductive ring and the grounding contact.

7. An electrically conductive vibration isolator according to Claim 1, wherein the flexible electrical conductor is curved relative to a plane defined by the center of the base of the dome and the points where the flexible electrical conductor joins the electrically conductive base and the grounding contact.

8. An electrically conductive vibration isolator according to Claim 2, wherein the flexible electrical conductor is curved relative to a plane defined by the center of the base of the dome and the points where the flexible electrical conductor joins the first and second conductive rings.

9. An electrically conductive vibration isolator according to Claim 3, wherein the flexible electrical conductor is curved relative to a plane defined by the center of the base of the dome and the points where the flexible electrical conductor joins the conductive ring and the grounding contact.

10. An electrically conductive vibration isolator according to Claim 1, wherein the grounding contact is a conductive ring supporting a removable conductive button.

11. An electrically conductive vibration isolator according to Claim 3, wherein the grounding contact is a conductive ring supporting a removable conductive button.

12. An electrically conductive vibration isolator according to Claim 1, wherein the grounding contact is a wafer.

13. An electrically conductive vibration isolator according to Claim 3, wherein the grounding contact is a wafer.

0209623

*FIG. 2*

*FIG. I*

FIG. 4

FIG. 3

FIG. 5

FIG. 7

FIG. 6

FIG. 8

FIG. 10

FIG. 9

FIG. 11

European Patent Office

| | DOCUMENTS CONSIDERED TO BE RELEVANT | | EP 85116173.7 |
|---|---|---|---|

| Category | Citation of document with indication where appropriate, of relevant passages | Relevant to claim | CLASSIFICATION OF THE APPLICATION (Int. Cl.4) |
|---|---|---|---|
| A | DE - A1 - 3 005 161 (BARRY WRIGHT CORP.)<br>* Totality * | | F 16 F 15/04 |
| A | US - A - 3 721 417 (SKALA et al.)<br>* Totality * | | |

**TECHNICAL FIELDS SEARCHED (Int. Cl.4)**

F 16 F 1/00
F 16 F 3/00
F 16 F 9/00
F 16 F 15/00

The present search report has been drawn up for all claims

| Place of search | Date of completion of the search | Examiner |
|---|---|---|
| VIENNA | 16-10-1986 | PIRKER |